# EUROPEAN PATENT APPLICATION

(11) **EP 4 349 189 A1**
(43) Date of publication of application: **10.04.2024**
(21) Application number: 22810296.8
(22) Date of filing: 26.04.2022
(51) Int. Cl.: A24F 40/40, A24F 40/46, A24F 40/50, A24F 40/90

(54) **ATOMIZATION CONTROL METHOD, CHARGING DEVICE, ATOMIZATION DEVICE, AND ELECTRONIC ATOMIZATION SYSTEM**

(30) Priority: 27.05.2021 CN 202110582916
(71) Applicant: Shenzhen Merit Technology Co., Ltd., Shenzhen, Guangdong 518000 (CN)
(72) Inventor: ZHANG, Xingfu, Shenzhen, Guangdong 518000 (CN); HUANG, Pengfei, Shenzhen, Guangdong 518000 (CN); LIAO, Yancheng, Shenzhen, Guangdong 518000 (CN); LIN, Qiaoshi, Shenzhen, Guangdong 518000 (CN)
(74) Representative: Corradini, Corrado
(86) International application number: PCT/CN2022/089246
(87) International publication number: WO 2022/247563

(57) **Abstract**

An atomization control method, applied to an electronic atomization device. The electronic atomization device comprises a power supply and a heating assembly. The atomization control method comprises: measuring a power supply voltage (S 101); determining whether the power supply voltage reaches a preset threshold (S 102); and if the power supply voltage reaches the preset threshold, controlling the heating assembly to heat and atomize an aerosol generating substrate (S103).

## Description

### CROSS-REFERENCE TO RELATED APPLICATION

This application claims priority to Chinese Patent Application No. 202110582916.2, filed with the China National Intellectual Property Administration and entitled "Atomization Control Method, Charging Device, Atomization Device, and Electronic Atomization System" on May 27, 2021, which is incorporated herein by reference in its entirety.

### TECHNICAL FIELD

The present invention relates to an atomization control method, a charging device, an atomization device, and an electronic atomization system.

### BACKGROUND

With the development of atomization technology, electronic atomization devices have appeared in various scenarios, including medical atomization devices, home moisturizing atomization devices, aerosol smoking atomization devices, etc. In order to be portable, some electronic atomization devices use batteries to power various components in the aerosol atomization devices, which provides the ability to quickly and conveniently recharge the aerosol-generating device for repeated use.

However, the inventors have realized that the battery power may have an impact on the atomization effect of the electronic atomization device. For example, the atomization is stopped due to low power during the operation after starting up, the expected aerosol volume cannot be reached in this case, and the aerosol-generating substrate for generating the aerosol is wasted. Current electronic atomization devices have problems such as dissatisfactory atomization effect, waste of aerosol-generating substrate, and so on.

### SUMMARY

According to various embodiments of the present invention, an atomization control method, a charging device, an atomization device and an electronic atomization system are provided.

An atomization control method is provided, which is applied to an electronic atomization device including a power supply and a heating component, and the atomization control method may include:
detecting the power supply voltage;
determining whether the power supply voltage reaches a preset threshold value; and
controlling the heating component to heat and atomize an aerosol-generating substrate when the power supply voltage reaches the preset threshold value.

An atomization device is provided, which may include a heating component configured to heat and atomize an aerosol-generating substrate, and may further include:
an atomization battery, configured to power an operation of the atomization device;
an atomization control circuit, configured to detect the voltage of the atomization battery, and control the heating component to heat the aerosol-generating substrate when the voltage of the atomization battery reaches a first preset threshold value.

A charging device is provided, which may include:
a rechargeable battery, configured to charge an atomization device when the atomization device is plugged into the charging device, and provide power to an operation of the atomization device, in which the atomization device is provided with a heating component configured to heat and atomize an aerosol-generating substrate;
a charging control circuit, configured to detect the voltage of the rechargeable battery when the atomization device is plugged into the charging device, and control the heating component to heat the aerosol-generating substrate when the voltage of the rechargeable battery reaches a second preset threshold value.

An electronic atomization system is provided, which may include the above-mentioned atomization device and the above-mentioned charging device;
the charging device is provided with a receiving chamber, the bottom portion of the receiving chamber is provided with a connector configured to electrically connect to the atomization device, the connector is configured to be electrically connected to the atomization device when the atomization device is plugged into the receiving chamber;
the atomization device is provided with a heating chamber configured to receive the aerosol-generating substrate, the heating component is provided in the heating chamber, the heating component is configured to heat the aerosol-generating substrate.

An atomization control apparatus is provided, which is applied to an electronic atomization device including a power supply and a heating component, the atomization control apparatus may include:
a detection module, configured to detect the power supply voltage;
a determination module, configured to determine whether the power supply voltage reaches a preset threshold value;
a heating control module, configured to control the heating component to heat and atomize an aerosol-generating substrate when the power supply voltage reaches the preset threshold value.

An electronic atomization device is provided, which may include:
a power supply;
a heating component, configured to heat an aerosol-generating substrate; and
a controller comprising a processor and a memory storing a computer program, in which the processor, when executing the computer program, implements the steps of the above-mentioned method.

A computer program product is provided, which may include a computer-readable storage medium storing computer-readable instructions, the computer-readable instructions, when executed by a processor, may cause the processor to implement the steps of:
detecting the power supply voltage;
determining whether the power supply voltage reaches a preset threshold value; and
controlling the heating component to heat and atomize an aerosol-generating substrate when the power supply voltage reaches the preset threshold value.

The details of one or more embodiments of the present invention are set forth in the accompanying drawings and the description below Other features and advantages of the present invention will become obvious from the description, drawings, and claims.

### BRIEF DESCRIPTION OF THE DRAWINGS

In order to describe the technical solution in the embodiments of the present invention more clearly, accompanying drawings required for the description of the embodiments will be briefly introduced. Obviously, the accompanying drawings in the following description are merely some of the embodiments of the present invention, and those skilled in the art can obtain other drawings according to these drawings without any inventive effort.
FIG. 1 is a flow chart showing an atomization control method according to an embodiment.
FIG. 2 is a flow chart showing an atomization control method according to another embodiment.
FIG. 3 is a flow chart of an atomization control method according to another embodiment.
FIG. 4 is a schematic diagram of a circuit structure of an electronic atomization device for detecting a power supply voltage according to an embodiment.
FIG. 5 is a schematic diagram of a circuit structure of an electronic atomization device for detecting a power supply voltage according to another embodiment.
FIG. 6 is a schematic diagram of a circuit structure of an electronic atomization device for detecting a power supply voltage according to another embodiment.
FIG. 7 is a schematic structure diagram of a charging device according to an embodiment.
FIG. 8 is a schematic structure diagram of an atomization device according to an embodiment.
FIG. 9 is a schematic structure diagram of an electronic atomization device with an atomization device inserted into a charging device according to an embodiment.
FIG. 10 is a structure block diagram of an atomization control device according to an embodiment.

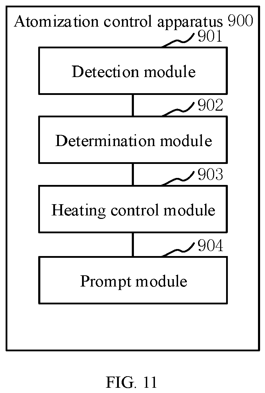

FIG. 11 is a structure block diagram of an atomization control device according to another embodiment.

### DETAILED DESCRIPTION OF THE EMBODIMENTS

In order to make the technical solution and advantages of the present invention clearer, the present application will be further described in detail below with reference to the drawings and embodiments. It should be appreciated that the specific embodiments described here are merely used for explaining the present application, rather than limiting the present application.

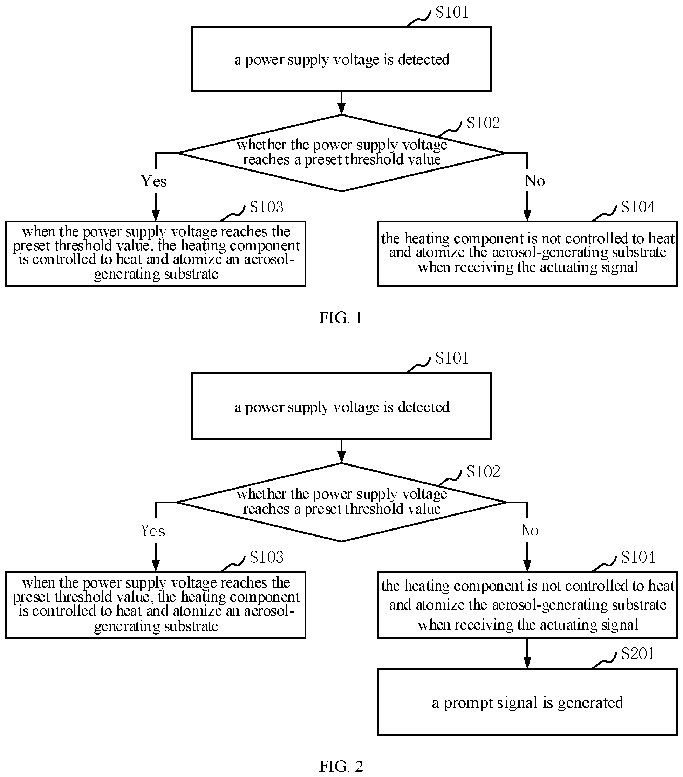

In an embodiment, as shown in FIG. 1, an atomization control method is provided, which is applied to an electronic atomization device. The electronic atomization device may include a power supply and a heating component. The atomization control method may include following steps.

Step S101: a power supply voltage is detected.

The power supply voltage refers to a power supply voltage serving as a power supply in the electronic atomization device to provide electrical energy for heating the heating component.

Step S102: it is determined whether the power supply voltage reaches a preset threshold value.

Step S103: when the power supply voltage reaches the preset threshold value, the heating component is controlled to heat and atomize an aerosol-generating substrate.

Step S104: if the power supply voltage does not reach the preset threshold value, the heating component is not controlled to heat and atomize the aerosol-generating substrate.

The aerosol-generating substrate may be a liquid aerosol-forming substrate or a plant leaf atomization substrate. For example, the preset threshold value may be in a range of 2.5V to 3.0V. In an embodiment, the preset threshold value is 2.7V

When the battery power is lower, the power supply voltage decreases, so that it is difficult to ensure a power or a voltage required for the normal atomization of the aerosol-generating substrate, resulting in insufficient atomization of the aerosol-generating substrate, or the inability to generate a sufficient amount of aerosols for users to use. In the embodiment of the present application, the electronic atomization device needs to trigger the heating and atomization when the power supply voltage reaches the preset threshold value. When the power supply voltage is lower than the preset threshold value, the heating component may not be controlled to heat and atomize the aerosol-generating substrate.

In the above atomization control method, the power supply voltage is detected, and it is determined whether the power supply voltage reaches the preset threshold value; when the power supply voltage reaches the preset threshold value, the heating component is controlled to heat and atomize the aerosol-generating substrate; when the power supply voltage is lower than the preset threshold value, heating and atomization are not performed. When the battery power is lower, the outputted power supply voltage of the electronic atomization device may also decrease and the normal output of the heating component cannot be guaranteed, which may affect the atomization effect of the aerosol-generating substrate. A control intervention is started up by detecting the power supply voltage, the detection is simple and has a high accuracy, which can ensure the operation when the power is sufficient, ensure the atomization effect, and avoid wasting the aerosol-generating substrate.

In an embodiment, the atomization control method may further include:
when the power supply voltage reaches the preset threshold value upon receiving an actuating signal, the heating component is controlled to heat and atomize the aerosol-generating substrate.

The actuating signal is configured to trigger the operation of the electronic atomization device. Specifically, the actuating signal may be a signal inputted by a user through an input component provided on the electronic atomization device. For the electronic atomization device configured to generate the aerosol for smoking, the actuating signal may be a smoking action of a user detected by an airflow detector or an air pressure detector provided on the electronic atomization device. In the embodiment, the electronic atomization device needs the power supply voltage to reach the preset threshold value when receiving the actuating signal before triggering the heating and atomization. When the power supply voltage is lower than the preset threshold value, the heating component is not controlled to heat and atomize the aerosol-generating substrate even if the actuating signal is received.

In an embodiment, the electronic atomization device is provided with a prompt component, as shown in FIG. 2, and the atomization control method may further include:
Step S201: when the power supply voltage is lower than the preset threshold value, a prompt signal is generated; the prompt signal is configured to instruct the prompt component to issue a prompt to inform the user that the power supply voltage is lower than the preset threshold value.

When the power supply voltage is lower than the preset threshold value, the user cannot be guaranteed to continue the normal use. At this time, a prompt signal is generated to instruct the prompt component to issue a prompt to remind the user that the power supply voltage is low and cannot work normally, and the user can charge or replace the battery in time.

In an embodiment, the preset threshold value is a voltage corresponding to the quantity of electricity for providing the heating component with at least one preset heating cycle.

The preset heating cycle is a duration ensuring the normal use of the electronic atomization device by the user at least once. For example, within the preset heating cycle, the aerosol-generating substrate can be fully heated and atomized and provide a duration for the daily use of the electronic atomization device by the user at least once. In a preset heating cycle, the electronic atomization device follows a preset temperature control curve with time as the abscissa and temperature as the ordinate to atomize the aerosol-generating substrate. The preset threshold value is a voltage corresponding to a battery power which can ensure to provide the heating component with at least one preset heating cycle. In an embodiment, the aerosol-generating substrate is a plant leaf atomization medium. In the preset heating cycle, the aroma or other components of the plant leaf atomization medium itself or the added aroma or other components can be heated and atomized according to a preset atomization amount, that is, the user can fully consume the plant leaf atomization medium during this use to avoid waste.

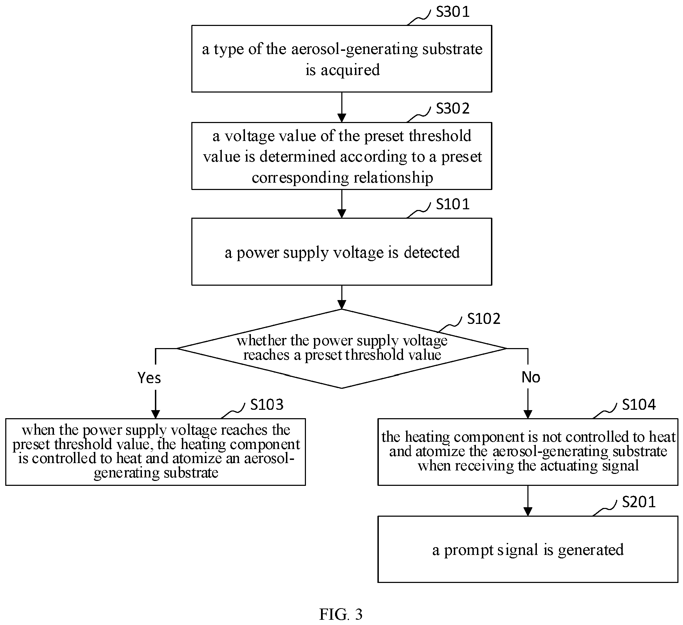

In an embodiment, as shown in FIG. 3, the atomization control method may further include the following steps.

Step S301: a type of the aerosol-generating substrate is acquired.

Step S302: a voltage value of the preset threshold value is determined according to a preset corresponding relationship between the type of the aerosol-generating substrate and the preset threshold value.

In use of the electronic atomization device, users can select different types of liquid aerosol-generating substrates according to their preferences, or select different types of plant leaf atomization media for atomization and use. For different types of aerosol-generating substrates, if a unified heating temperature control curve is adopted when in use, the amount of the aerosols generated may be affected. Accordingly, it is required to select a corresponding temperature control curve for heating according to the type of the aerosol-generating substrate. Correspondingly, due to the different heating temperature control curves, the voltage value corresponding to the preset threshold value may also be different. In the embodiment, the type of the aerosol-generating substrate can be acquired first, and then the voltage value corresponding to the preset threshold value is determined according to the corresponding relationship between the type of the aerosol-generating substrate and the preset threshold value, thereby ensuring that when in use of the electronic atomization device with different types of aerosol-generating substrates, the heating and atomization when the battery power is low can be avoided, accordingly the atomization effect is guaranteed.

In an embodiment, the preset heating cycle may include a preset atomization duration in which the temperature of the heating component is maintained at the atomization temperature.

As an example, the preset heating cycle includes the preset atomization duration in which the temperature of the heating component is maintained at the atomization temperature. Specifically, the heating process of the electronic atomization device may include: the electronic atomization device heats up from an initial temperature to the atomization temperature, and is maintained at the atomization temperature for the preset atomization duration, so that the preset threshold value is the voltage corresponding to the quantity of electricity that can provide the heating component with at least one complete heating process. The atomization temperature may be a range interval or a specific temperature value.

In another embodiment, the preset heating cycle may include a preset atomization duration in which the temperature of the heating component is maintained at a preset temperature control curve. Specifically, the heating process of the electronic atomization device may include: the electronic atomization device heats up from the initial temperature to the atomization temperature, and is maintained at the atomization temperature for the preset atomization duration, and then the atomization temperature decreases in a curve. Accordingly, the preset threshold value is the voltage corresponding to the quantity of electricity that can provide the heating component with at least one complete heating process. The atomization temperature is a real-time value corresponding to the temperature control curve. As time changes, the atomization temperature may change and is not a constant value.

In an embodiment, the preset heating cycle may include a preset atomization duration in which an output power of the heating component is maintained at a target power.

For an electronic atomization device that adopt a constant power heating strategy, the preset heating cycle may include the preset atomization duration in which the output power of the heating component is maintained at the target power. Specifically, the heating process of the electronic atomization device may include: the electronic atomization device heats up from the initial temperature to the atomization temperature, and is maintained at the target power for the preset atomization duration, so that the preset threshold value is the voltage corresponding to the quantity of electricity that can provide the heating component with at least one complete heating process. The target temperature may be a range interval or a specific power value.

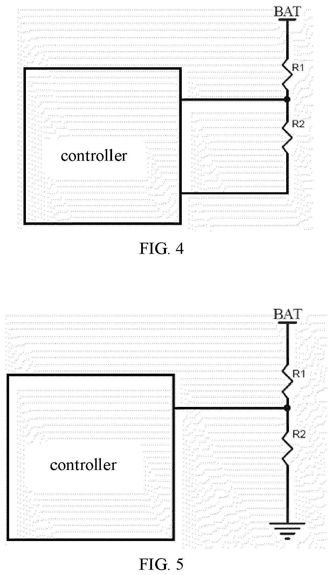

In the embodiment of the present invention, the power supply voltage can be detected by sampling the power supply voltage via a sampling circuit before feeding the power supply voltage back to a controller of the electronic atomization device (as shown in FIGS. 4 and 5). As shown in FIG. 4, in an embodiment, the sampling circuit may include a first resistor R1 and a second resistor R2. A first end of the first resistor R1 is connected to the power supply BAT. A second end of the first resistor R1 is respectively connected to a first end of the second resistor R2 and the controller; a second end of the second resistor R2 is grounded. The controller collects the voltages at the second ends of R1 and R2, and calculates the voltage value of the power supply according to the voltage drops of R1 and R2. As shown in FIG. 5, in an embodiment, the controller outputs a low level to the second end of the second resistor R2, which is equivalent to grounding the second end of the second resistor R2. The controller collects the voltage at the second end of R1, and calculates the voltage value of the power supply according to the voltage drop of R1.

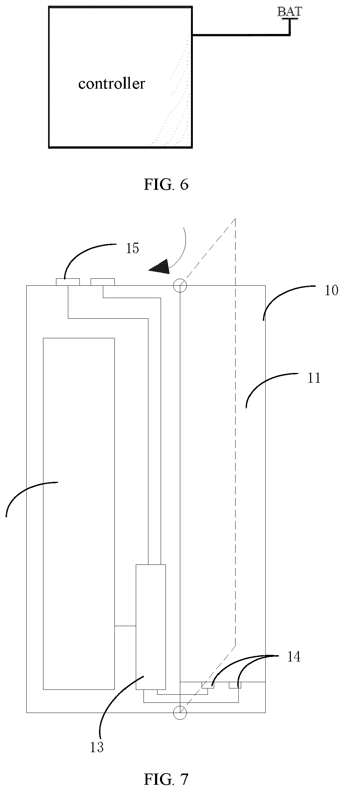

In an embodiment, the detection of the power supply voltage can be implemented by a direct collection via the controller of the electronic atomization device (as shown in FIG. 6), and the power supply BAT is directly connected to a collection terminal of the controller.

It should be appreciated that although various steps in the flow charts of FIGS. 1 to 3 are shown in sequence as indicated by arrows, these steps are not definitely executed in the order indicated by arrows. Unless explicitly stated in this article, there is no strict order restriction on the execution of these steps, and these steps may also be executed in other orders. Moreover, at least some of the steps in FIGS. 1 to 3 may include multiple steps or stages. These steps or stages are not definitely executed at the same time, but may be executed at different time. The order of execution is not definitely sequential, but may be performed in turn or alternately with other steps or at least part of steps or stages in other steps.

In an embodiment, as shown in FIG. 7, a charging device 10 is further provided, including a rechargeable battery 12 and a charging control circuit 13. The charging control circuit 13 is electrically connected to the rechargeable battery 12. The rechargeable battery 12 is configured to charge the atomization device 20 when the atomization device 20 is plugged into the charging device 10, and to provide power to the heating component 21 of the atomization device 20. The charging control circuit 13 is configured to detect the voltage of the rechargeable battery 12 when the atomization device 20 is plugged into the charging device 10, and to control the heating component 21 to heat the aerosol-generating substrate when the voltage of the rechargeable battery 12 reaches a second preset threshold value and a second actuating signal is received. The atomization device 20 is provided with the heating component 21, and the heating component 21 is configured to heat the aerosol-generating substrate to generate the aerosol. The charging device 10 is provided with a receiving chamber 11. A bottom portion of the receiving chamber 11 is provided with a connector 14 configured to electrically connect to the atomization device 20. The connector 14 is configured to be electrically connected to the atomization device 20 when the atomization device 20 is plugged into the receiving chamber 11. The rechargeable battery 12 of the charging device 10 can be charged by connecting to the commercial power.

In an embodiment, the atomization device 20 is plugged into the charging device 10 to charge an atomization battery 23 of the atomization device 20; and at the moment, the charging device 10 supplies power to at least the heating component 21 of the atomization device 20, that is, the atomization can also be performed when the atomization device 20 is plugged into the charging device 10, and this moment the rechargeable battery 12 supplies power to the heating component 21. The charging control circuit 13 determines whether the voltage of the rechargeable battery 12 reaches the second threshold value, and controls the heating component 21 to heat the aerosol-generating substrate when the voltage of the rechargeable battery 12 reaches the second threshold value. Specifically, the charging control circuit 13 controls the energy outputted from the rechargeable battery 12 to the heating component, thereby implementing the heating and atomization of the aerosol-generating substrate. When determining that the voltage of the rechargeable battery 12 is lower than the second threshold value, the charging control circuit 13 does not control the heating component 21 to heat the aerosol-generating substrate. In the embodiment, the voltage of the rechargeable battery 12 is equivalent to the power supply voltage in the above-mentioned atomization control method.

In an embodiment, the charging control circuit is configured to control the heating component to heat the aerosol-generating substrate when receiving the second actuating signal and the voltage of the rechargeable battery reaches the second preset threshold value, hereby avoiding wastage caused by heating when not in use by the user.

The second threshold value is equivalent to the preset threshold value in the atomization control method. The second actuating signal is equivalent to the actuating signal in the atomization control method.

In an embodiment, as shown in FIG. 7, the charging device 10 may further include a second prompter 15; the second prompter 15 is electrically connected to the charging control circuit 13. The charging control circuit 13 is further configured to generate and transmit a second prompt signal to the second prompter 15 when the voltage of the rechargeable battery 12 is lower than the second threshold value. The second prompter 15 is configured to issue a prompt when receiving the second prompt signal to prompt the user that the voltage of the rechargeable battery 12 is lower than the second threshold value. In the embodiment, the second prompt signal is equivalent to the prompt signal in the atomization control method.

The second prompter 15 can issue prompts through a sound, lamplight or text prompt. Specifically, the second prompter 15 may be a prompt lamp, which flashes or stays on as a prompt when receiving the second prompt signal.

In an embodiment, the second threshold value is a voltage corresponding to the quantity of electricity for providing the heating component with at least one preset heating cycle.

The preset heating cycle is a duration ensuring the normal use of the electronic atomization device by the user at least once. For example, within the preset heating cycle, the aerosol-generating substrate can be fully heated and atomized and provide a duration for the daily use of the electronic atomization device by the user at least once. The second threshold value is a voltage corresponding to a battery power which can ensure to provide the heating component with at least one preset heating cycle. In an embodiment, the aerosol-generating substrate is a plant leaf atomization medium. In the preset heating cycle, the plant leaf atomization medium can be completely heated and atomized, that is, the user can fully consume the plant leaf atomization medium during this use process to avoid waste.

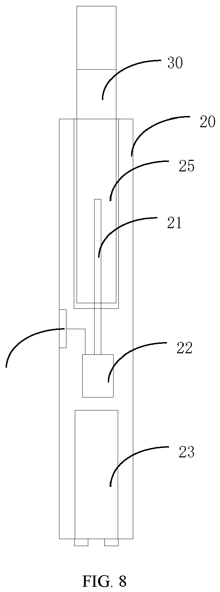

In an embodiment, an atomization device 20 is provided. The atomization device 20 may be used independently. When used independently, the atomization battery 23 supplies power to each component of the atomization device 20 (including the heating component 21). In an embodiment, as shown in FIG. 8, the atomization device 20 may include a heating component 21, an atomization battery 23 and an atomization control circuit 22. The atomization battery 23 is electrically connected to the heating component 21 and the atomization control circuit 22 respectively. The heating component 21 is configured to heat and atomize the aerosol-generating substrate; and the atomization control circuit 22 is configured to control the energy provided by the atomization battery 23 to the heating component 21 when the atomization device 20 is not plugged into the charging device 10, to implement the heating control. The atomization control circuit 22 determines whether the voltage of the atomization battery 23 reaches the first threshold value, and controls the heating component 21 to heat the aerosol-generating substrate when the voltage of the atomization battery 23 reaches the first threshold value. When determining that the voltage of the atomization battery 23 is lower than the first threshold value, the atomization control circuit 22 does not control the heating component 21 to heat the aerosol-generating substrate. In the embodiment, the voltage of the atomization battery 23 is equivalent to the power supply voltage in the above-mentioned atomization control method.

In an embodiment, the atomization control circuit is configured to control the heating component to heat the aerosol-generating substrate when receiving the first actuating signal and the voltage of the atomization battery reaches the first preset threshold value, thereby avoiding wastage caused by heating when not in use by the user.

The first threshold value is equivalent to the preset threshold value in the atomization control method. The first actuating signal is equivalent to the actuating signal in the atomization control method. In addition, the atomization device 20 is provided with a heating chamber configured to receive the aerosol-generating substrate. The heating component 21 is provided in the heating chamber. The heating component 21 is configured to heat the aerosol-generating substrate.

In an embodiment, as shown in FIG. 8, the atomization device 20 may further include a first prompter 24. The first prompter 24 is electrically connected to the atomization control circuit 22. The atomization control circuit 22 is further configured to generate and transmit a first prompt signal to the first prompter 24 when the voltage of the atomization battery 23 is lower than the first threshold value. The first prompter 24 is configured to issue a prompt when receiving the first prompt signal to prompt the user that the voltage of the atomization battery 23 is lower than the first threshold value. In the embodiment, the first prompt signal is equivalent to the prompt signal in the above atomization control method.

The first prompter 24 may issue prompts in the form of sound, lamplight or text prompt. Specifically, the first prompter 24 may be a prompt lamp, which flashes or stays on as a prompt when receiving the first prompt signal.

In an embodiment, the first threshold value is a voltage corresponding to the quantity of electricity for providing the heating component with at least one preset heating cycle.

The preset heating cycle is a duration ensuring the normal use of the electronic atomization device by the user at least once. For example, within the preset heating cycle, the aerosol-generating substrate can be fully heated and atomized and provide a duration for the daily use of the electronic atomization device by the user at least once. The first threshold value is a voltage corresponding to a battery power which can ensure to provide the heating component with at least one preset heating cycle. In an embodiment, the aerosol-generating substrate is a plant leaf atomization medium. In the preset heating cycle, the plant leaf atomization medium can be completely heated and atomized, that is, the user can fully consume the plant leaf atomization medium during this use to avoid waste.

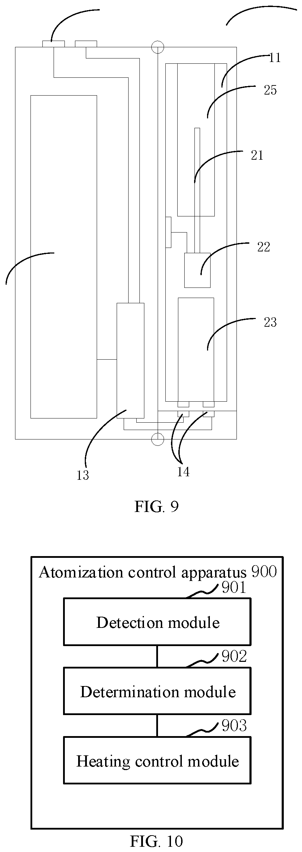

In an embodiment, as shown in FIG. 9, an electronic atomization system 20 is further provided, including the above-mentioned charging device 10 and atomization device 20. The charging device 10 or the atomization device 20 of the electronic atomization device detects the power supply voltage (the voltage of the rechargeable battery or the voltage of the atomization battery) and determines whether the power supply voltage reaches the preset threshold value, and controls the heating component 21 to heat and atomize the aerosol-generating substrate when receiving the actuating signal if the power supply voltage reaches the preset threshold value. If the power supply voltage is lower than the preset threshold value, the heating and atomization are not performed. Since the outputted power supply voltage of the electronic atomization device may also decrease when the battery power is low, the normal output of the heating component 21 cannot be guaranteed, accordingly the atomization effect of the aerosol-generating substrate may be affected. The intervention of start-up control is performed by detecting the power supply voltage, such detection is simple and has a high accuracy, which can ensure the operation when the quantity of electricity is sufficient, thereby ensuring the atomization effect and avoiding waste of the aerosol-generating substrate.

In an embodiment, as shown in FIG. 10, an atomization control apparatus 900 is further provided, including a detection module 901, a determination module 902, and a heating control module 903.

The detection module 901 is configured to detect a power supply voltage.

The determination module 902 is configured to determine whether the power supply voltage reaches a preset threshold value.

The heating control module 903 is configured to control the heating component to heat and atomize the aerosol-generating substrate when the power supply voltage reaches the preset threshold value.

In an embodiment, the electronic atomization device is provided with a prompt component, and the atomization control apparatus 900 further includes:
a prompt module 904, configured to generate a prompt signal when the power supply voltage is lower than a preset threshold value, in which the prompt signal is configured to instruct the prompt component to issue a prompt to inform the user that the power supply voltage is lower than the preset threshold value.

In an embodiment, the atomization control apparatus may further include:
a type acquisition module, configured to obtain a type of the aerosol-generating substrate;
a voltage value determination module, configured to determine a voltage value of the preset threshold value according to a preset corresponding relationship between the type of the aerosol-generating substrate and the preset threshold value.

For specific limitations on the atomization control apparatus, reference can be made to the above limitations on the atomization control method, which will not be repeated here. Each module in the above-mentioned atomization control apparatus can be implemented in whole or in part by software, hardware and combinations thereof. Each of the above modules may be embedded in or independent of the processor of a computer device in the form of hardware, or may be stored in the memory of the computer device in the form of software, so that the processor can invoke and execute the operations corresponding to the above modules.

In an embodiment, an electronic atomization device is provided, including a power supply, a heating component and a controller. The heating component is configured to heat the aerosol-generating substrate. The controller may include a memory and a processor. The memory stores a computer program, and the processor, when executing the computer program, may implement the following steps of:
detecting a power supply voltage;
determining whether the power supply voltage reaches a preset threshold value;
controlling the heating component to heat and atomize an aerosol-generating substrate when the power supply voltage reaches the preset threshold value.

In an embodiment, the processor, when executing the computer program, may further implement the following step of:
when the power supply voltage reaches the preset threshold value upon receiving an actuating signal, controlling the heating component to heat and atomize the aerosol-generating substrate.

In an embodiment, the processor, when executing the computer program, may further implement the following step of:
generating a prompt signal when the power supply voltage is lower than the preset threshold value, in which the prompt signal is configured to instruct the prompt component to issue a prompt to inform the user that the power supply voltage is lower than the preset threshold value.

In an embodiment, the processor, when executing the computer program, may further implement the following steps of:
acquiring a type of the aerosol-generating substrate;
determining a voltage value of the preset threshold value according to a preset corresponding relationship between the type of the aerosol-generating substrate and the preset threshold value.

In an embodiment, a computer program product is provided, including one or more non-transitory storage media storing computer-readable instructions. The computer-readable instructions, when executed by one or more processors, cause one or more processors to perform the following steps of:
detecting a power supply voltage;
determining whether the power supply voltage reaches a preset threshold value;
controlling the heating component to heat and atomize an aerosol-generating substrate when the power supply voltage reaches the preset threshold value.

In an embodiment, the computer-readable instructions, when executed by the processor, may further cause the processor to perform the following steps of:
when the power supply voltage reaches the preset threshold value upon receiving an actuating signal, controlling the heating component to heat and atomize the aerosol-generating substrate.

In an embodiment, the computer-readable instructions, when executed by the processor, may further cause the processor to perform the following steps of:
generating a prompt signal when the power supply voltage is lower than the preset threshold value, in which the prompt signal is configured to instruct the prompt component to issue a prompt to inform the user that the power supply voltage is lower than the preset threshold value.

In an embodiment, the computer-readable instructions, when executed by the processor, may further cause the processor to perform the following steps of:
acquiring a type of the aerosol-generating substrate;
determining a voltage value of the preset threshold value according to a preset corresponding relationship between the type of the aerosol-generating substrate and the preset threshold value.

Those of ordinary skill in the art can understand that all or part of the processes in the methods of the above embodiments can be implemented by instructing relevant hardware through computer-readable instructions. The computer-readable instructions can be stored in a non-transitory computer-readable storage medium, when the computer-readable instructions are executed, the procedures in the above method embodiments may be included. Any reference to memory, storage, database or other media used in the embodiments provided in the present invention may include a non-transitory memory and/or a volatile memory. The non-transitory memory may include a read-only memory (ROM), a programmable ROM (PROM), an electrically programmable ROM (EPROM), an electrically erasable programmable ROM (EEPROM), or a flash memory. The transitory memory may include a random access memory (RAM) or an external cache memory. By way of illustration and not limitation, the RAM is available in many forms, such as static RAM (SRAM), dynamic RAM (DRAM), synchronous DRAM (SDRAM), double data rate SDRAM (DDRSDRAM), enhanced SDRAM (ESDRAM), synchronous chain Synchlink DRAM (SLDRAM), memory bus (Rambus) direct RAM (RDRAM), direct memory bus dynamic RAM (DRDRAM), and memory bus dynamic RAM (RDRAM), etc.

The technical features of the above embodiments can be combined in any way. To simplify the description, not all possible combinations of the technical features in the above embodiments are described. However, as long as there is no contradiction in the combinations of these technical features, all possible combinations should be regarded as being within the scope of the present invention.

The above-described embodiments only express several implementation modes of the present invention, and the descriptions are relatively specific and detailed, but should not be construed as limiting the scope of the present invention. It should be noted that, those of ordinary skill in the art can make several modifications and improvements without departing from the concept of the present invention, and these all fall within the protection scope of the present invention. Therefore, the protection scope of the present invention should be subject to the appended claims.

## Claims

1. An atomization control method, applied to an electronic atomization device comprising a power supply and a heating component, the atomization control method comprising:
detecting thepower supply voltage;
determining whether the power supply voltage reaches a preset threshold value; and
controlling the heating component to heat and atomize an aerosol-generating substrate when the power supply voltage reaches the preset threshold value.

2. The atomization control method according to claim 1, further comprising:
when an actuating signal is received and the power supply voltage reaches the preset threshold value, controlling the heating component to heat and atomize the aerosol-generating substrate.

3. The atomization control method according to claim 1, wherein the electronic atomization device comprises a prompt component, and the mothed further comprises:
generating a prompt signal when the power supply voltage is lower than the preset threshold value, the prompt signal being configured to instruct the prompt component to issue a prompt to inform a user that the power supply voltage is lower than the preset threshold value.

4. The atomization control method according to any one of claims 1 to 3, wherein the preset threshold value is a voltage corresponding to a quantity of electricity for providing the heating component with at least one preset heating cycle.

5. The atomization control method according to claim 4, further comprising:
acquiring a type of the aerosol-generating substrate;
determining a voltage value of the preset threshold value according to a preset corresponding relationship between the type of the aerosol-generating substrate and the preset threshold value.

6. The atomization control method according to claim 4, wherein the preset heating cycle comprises a preset atomization duration in which a temperature of the heating component is maintained at an atomization temperature.

7. The atomization control method according to claim 4, wherein the preset heating cycle comprises a preset atomization duration in which an output power of the heating component is maintained at a target power.

8. An atomization device, comprising a heating component configured to heat and atomize an aerosol-generating substrate, wherein the atomization device further comprises:
an atomization battery, configured to power an operation of the atomization device;
an atomization control circuit, configured to detect the voltage of the atomization battery, and control the heating component to heat the aerosol-generating substrate when the voltage of the atomization battery reaches a first preset threshold value.

9. The atomization device according to claim 8, wherein the atomization control circuit is configured to control the heating component to heat the aerosol-generating substrate when receiving a first actuating signal and the voltage of the atomization battery reaches the first preset threshold value.

10. The atomization device according to claim 8, further comprising:
a first prompter, configured to issue a prompt when receiving a first prompt signal to prompt a user that the voltage of the atomization battery is lower than the first threshold value;
wherein the atomization control circuit is further configured to generate and transmit the first prompt signal to the first prompter when the voltage of the atomization battery is lower than the first threshold value.

11. The atomization device according to any one of claims 8 to 10, wherein the first threshold value is a voltage corresponding to a quantity of electricity for providing the heating component with at least one preset heating cycle.

12. A charging device, comprising:
a rechargeable battery, configured to charge an atomization device when the atomization device is plugged into the charging device, and provide power to an operation of the atomization device, wherein the atomization device is provided with a heating component configured to heat and atomize an aerosol-generating substrate;
a charging control circuit, configured to detect the voltage of the rechargeable battery when the atomization device is plugged into the charging device, and control the heating component to heat the aerosol-generating substrate when the voltage of the rechargeable battery reaches a second preset threshold value.

13. The charging device according to claim 12, wherein the charging control circuit is configured to control the heating component to heat the aerosol-generating substrate when receiving a second actuating signal and the voltage of the rechargeable battery reaches the second preset threshold value.

14. The charging device according to claim 12, further comprising:
a second prompter, configured to issue a prompt when receiving a second prompt signal to prompt a user that the voltage of the rechargeable battery is lower than the second threshold value;
wherein the charging control circuit is further configured to generate and transmit the second prompt signal to the second prompter when the voltage of the rechargeable battery is lower than the second threshold value.

15. The charging device according to any one of claims 12 to 14, wherein the second threshold value is a voltage corresponding to a quantity of electricity for providing the heating component with at least one preset heating cycle.

16. An electronic atomization system, comprising the atomization device according to any one of claims 8 to 11 and the charging device according to any one of claims 12 to 15;
wherein the charging device is provided with a receiving chamber, the bottom portion of the receiving chamber is provided with a connector configured to electrically connect to the atomization device, and the connector is configured to be electrically connected to the atomization device when the atomization device is plugged into the receiving chamber; and
the atomization device is provided with a heating chamber configured to receive the aerosol-generating substrate, the heating component is provided in the heating chamber, and the heating component is configured to heat the aerosol-generating substrate.

17. An atomization control apparatus, applied to an electronic atomization device comprising a power supply and a heating component, the atomization control apparatus comprising:
a detection module, configured to detect the power supply voltage;
a determination module, configured to determine whether the power supply voltage reaches a preset threshold value;
a heating control module, configured to control the heating component to heat and atomize an aerosol-generating substrate when the power supply voltage reaches the preset threshold value.

18. The atomization control apparatus according to claim 17, wherein the electronic atomization device is provided with a prompt component, and the atomization control apparatus further comprises:
a prompt module, configured to generate a prompt signal when the power supply voltage is lower than the preset threshold value, the prompt signal being configured to instruct the prompt component to issue a prompt to inform a user that the power supply voltage is lower than the preset threshold value.

19. An electronic atomization device, comprising:
a power supply;
a heating component, configured to heat an aerosol-generating substrate; and
a controller comprising a processor and a memory storing a computer program, wherein the processor, when executing the computer program, implements the steps of the method of any one of claims 1 to 7.

20. A computer program product, comprising a computer-readable storage medium storing computer-readable instructions, wherein the computer-readable instructions, when executed by a processor, cause the processor to implement the steps of the method of any one of claims 1 to 7.
